Europäisches Patentamt

European Patent Office

Office européen des brevets

(11) Publication number: **0 134 833**
**A1**

(12) **EUROPEAN PATENT APPLICATION**

(21) Application number: **83109262.2**

(22) Date of filing: **19.09.83**

(51) Int. Cl.⁴: **F 23 N 3/02**
**G 05 D 7/01**

(43) Date of publication of application:
**27.03.85 Bulletin 85/13**

(84) Designated Contracting States:
**AT BE DE FR GB NL SE**

(71) Applicant: **Niskanen, Erkki Johannes**
**Länsituulentie 8 A 16**
**FI-02100 Espoo 10(FI)**

(72) Inventor: **Niskanen, Erkki Johannes**
**Länsituulentie 8 A 16**
**FI-02100 Espoo 10(FI)**

(74) Representative: **Zipse + Habersack**
**Kemnatenstrasse 49**
**D-8000 München 19(DE)**

(54) **Method for controlling fluid flow.**

(57) The invention relates to a method for regulating a fluid flow in a conduit such as a combustion air i.e. draught of central heating boilers in a flue or maintaining constant pressure in a space to which the conduit is connected. A valve (50) placed in the conduit is controlled by means of appropriate physical characteristics such as pressure and/or temperature of fluid. There is connected between the said conduit and the environment of the boiler or another appropriate space a control conduit and the control flow in the said control flow conduit is regulated by means of the known method based on the principle of cascade flow in which method there is arranged in connection with the conduit preferably a cylinder space having the end walls one of which being movable and which cylinder space is connected with the first opening $(d'_1)$ against the comparison or inlet pressure $(p_1)$ and the second opening $(d'_2)$ against the outlet pressure $(p_3)$ or the pressure in the conduit and in which method the regulation of the internal pressure $(p_2)$ of the cylinder space is effected through changing the mutual ratio of the areas of the openings $(d'_1, d'_2)$ by a piston (14, 19) joined to the movable wall and/or through controlling the mutual ratio of the areas of the openings from outside of the cylinder space so that the piston force needed for changing the cross-sectional flow area of the opening and needed for the regulation of flow at each moment and each pressure difference is equal to the sum of the forces opposing the said movement and the displacement of the movable wall and the piston at the same time is transmitted further to the control movement of the position of the valve's flap (51).

./...

CONTROL AIR

$P_1$

$P_2$

$P_3$

$d_1^1$

$d_2^1$

$ig'$

FIG.1

METHOD FOR REGULATING FLUID FLOW

The present invention relates to a method for regulating fluid flow in a conduit, in which method a valve placed in the conduit is controlled with appropriate physical characteristics such as pressure and/or temperature of the flowing fluid.

Normally the regulation of fluid flow is carried out by assembling a suitable valve to the conduit, which in itself contains necessary means for controlling.

In prior art there are known such arrangements, in which the energy needed by a device for conditioning fluid flow is obtained from kinetic energy of the fluid. Defects of these arrangements are, among other things, relatively great pressure difference to be needed and difficulties to bring adjustability into effect.

In the Finnish Patent Publication no. 60 069 is introduced a method for conditioning and/or regulating gaseous medium flow. According to this method an enclosure like cylinder is arranged in a conduit. It has the end walls with openings and the mutual ratio of the areas of the openings is controlled with suitable means, and so the flow in the conduit is regulated by exploiting the pressure difference resulting from flowing of medium itself.

The above mentioned controlling methods of fluid flow are directly intended to adjust the flow. If it is in question e.g. about controlling of gas flow which is hot and/or the temperature of which varies, there will be immediate problems. High temperatures affect the reliability, working ability and accuracy of ordinary adjustable valves. In this case expensive special solutions have to be made.

The method applied in the invention is not limited to any particular fluid/gas or fluid/gas handling system. Its desirable features and its attendant advantages are, however, most apparent when applied in conjunctions with the control of draught in central heating boilers. In this embodiment of the invention a butterfly valve placed in a flue is, controlled among other things, through pressure in the flue and/or temperature of heating water.

Draught regulating systems for the control of combustion air in central heating boilers, which are small or medium in size, generally employ a bi-metal spiral spring or thermostat, which by means of a chain, closes the fire-door in case that the temperature of water in the system has reached the maximum allowed. That kind of system has several defects. It affects the primary air only, and there is no continuous control of secondary air. The action of the system has certain delay causing fluctuations in the process of combustion. The system is not responsive to variations in pressure in the flue due to variations in wind direction and pressure and to the temperature of the flue gases.

The system described above is, in fact, a system of safety against boiling, not a system for maintaining constant draught as would, however, be important especially with boilers which use and are continuously fed with solid fuel.

The defects of the controlling system using spiral spring or the like can be avoided by means of an automatic butterfly valve or equivalent in the flue, which is responsive to variations in the pressure of the flue gases and to the temperature of heating water. The outdoor temperature can also be considered in the regulation operation. For this purpose, however, a complicated system with electronic and electromechanical components is necessary to control the movements of the flap. This kind of device is expensive and needs a lot of service.

The purpose of the invention is to avoid the above mentioned defects and to provide a method for controlling fluid flow, which method can be used when pressure differences are very low and also when the temperature of fluid is high. This is achieved so that there is arranged a control flow conduit between the main flow conduit and a suitable comparison space in which control conduit fluid flow is regulated by the method based on the principle of cascade flow and in connection with the control flow conduit there is arranged the said cylinder space connected with the first opening to the comparison space and with the second opening to the main flow conduit and the displacement of the movable wall and the piston at the same time is transmitted further to the control movement of the position of the valve placed in the main conduit.

The purpose of the invention is further to provide an adustable draught and combustion control device, which maintains selected constant draught between certain maximum and minimum values of the flue pressure and/or which is responsive to the temperature of water.This is achieved so that an air flow conduit is arranged between the environment of the central heating boiler and the flue and the air flow i.e. the control air flow in the said air flow conduit is regulated by means of the method based on the principle of cascade flow in which method there is arranged in connection with the air flow conduit the cylinder space having the end walls with the openings, one of the walls at least being movable and the regulation of the control air flow is effected through changing the mutual ratio of the areas of the openings by a piston joined to one of the movable walls and the displacement of the movable wall and the piston at

_the same time is transmitted further to the control movement the position of the flap of the valve placed in the flue.

According to the present invention, there is provided a device, which is capable of maintaining a substantially constant draught in central heating boilers using solid fuel. This device is responsive even to small variations in flue pressure which are caused by variations in temperature of the flue gases, thermal height of the flue and variations in direction and pressure of winds. The temperatures of heating water and indoor or outdoor air can also be considered in the regulation operation.

In the above mentioned application the control of the main flow is done by means of a butterfly flap. In the method according to the invention can, instead of a butterfly, be used an ordinary disk valve, an application of which is a constant pressure valve controlled by cascade effect. For example in ventilation technics the arrangements are known in which pressure in a space is tried to maintain constant by employing e.g. two different constant flow valves or one constant pressure valve adjusted to the volume flow, in both cases outside energy is used for control functions.

The purpose of this embodiment of the invention is to avoid above mentioned expensive sensors and driving motors with auxiliary means. This is achieved so that a control conduit is arranged between the said space and the main flow conduit or equivalent comparison space and the control fluid flow flowing through the said control conduit is regulated by means of the said method based on the  principle of cascade flow in which method there is arranged in connection with the said control conduit the cylinder space having the end walls with the openings one of the walls at least being movable and the regulation of the control fluid flow is effected through changing the mutual ratio of the areas of the opening by a piston joined to one of the movable walls and the displacement of the movable wall and the piston at the same time is transmitted further to the control movement of the member, preferably the valve disk by which the main flow is regulated.

Contrary to the relief and safety valves, which also are used for keeping pressure constant in a space and where pressure in a space varies between two predetermined values, the embodiment of the present invention is capable of maintaining, at each moment and pressure, a rate of flow, which tends to retain the object pressure in said space, thus following the curve of volume flow of constant pressure.

In the following the present invention is explained in detail with reference to the accompanying drawings, where

FIG. 1 is a cross-sectional view of one embodiment of the draught control device;

FIG. 2 is a schematic representation illustrating the principle of cascade flow applied;

FIG. 3 is a schematic representation illustrating how the equation of pressure difference ratios of cascade flow is employed in the applications of the present invention;

FIG. 4 is a schematic representation illustrating, how the device of the present invention is applied in control of draught in central heating boilers;

FIG. 5 is a butterfly flap assembled to a flue;

FIG. 6-10 are curves for dimensioning of a control cone;

FIG. 11 is a control cone;

FIG. 12 is an embodiment of the constant pressure valve
        according to the invention

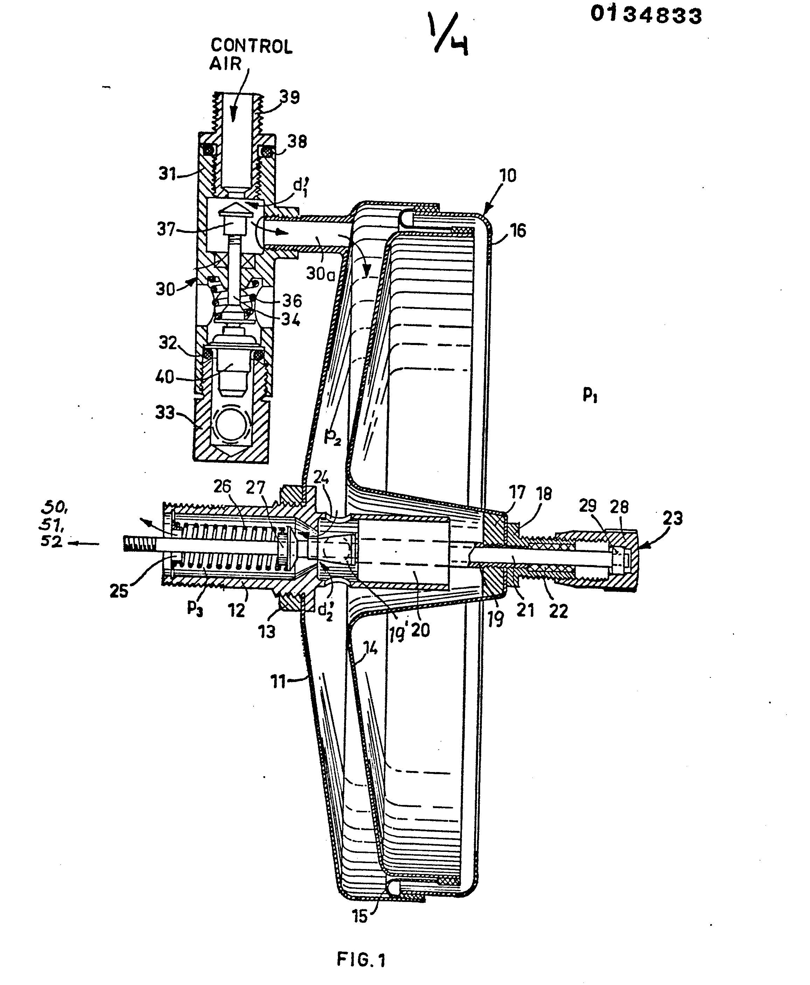

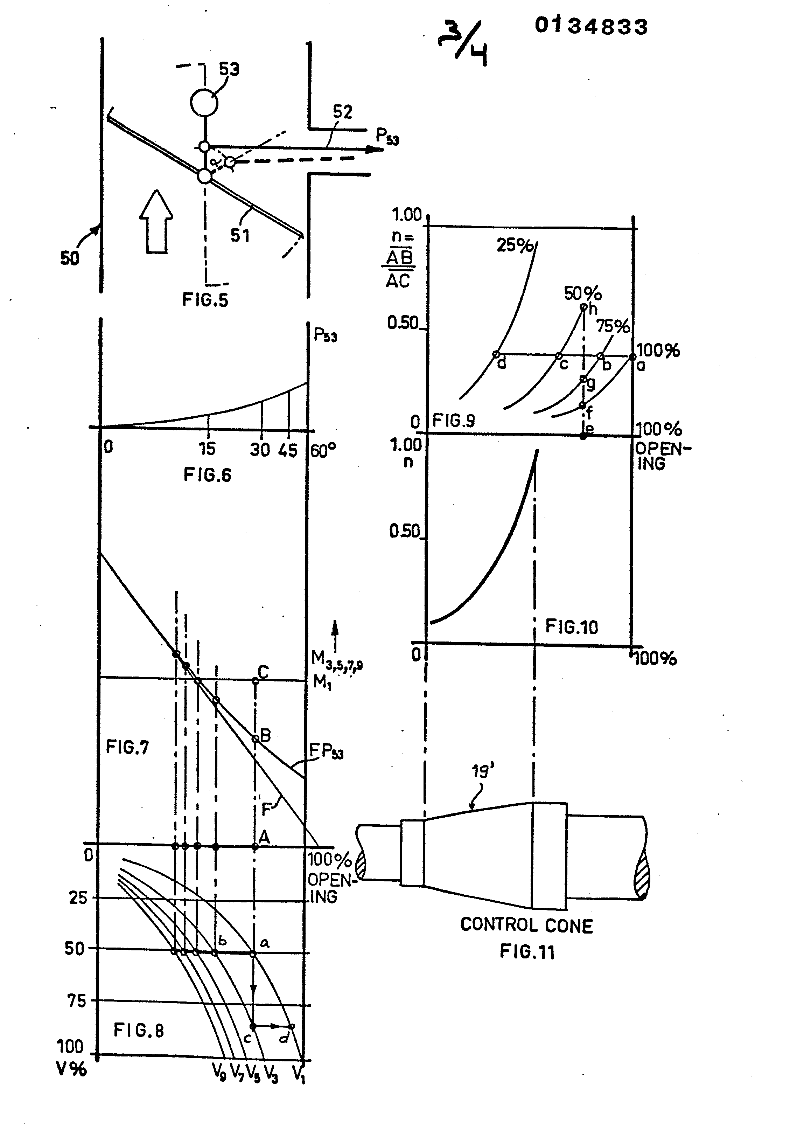

The draught control device, illustrated by Fig. 1 and 4,
in which the method of the invention is applied comprises an
assembly of an actuator 10 and means of control and
adjustment 23, a thermostat valve 30, a filter 41 and a flue
gas valve, comprising a valve housing 50, a butterfly valve
51 and connecting means 52.

The valve housing 50 is located in the flue 43 of a central
heating boiler 42. The boiler is of natural draught type
using solid fuel. The thermostat valve 30 is connected, with
a supply pipe 46, to heating water main pipe 44, and with an
exhaust pipe 47, to the return water main pipe 45 of the boiler
respectively.

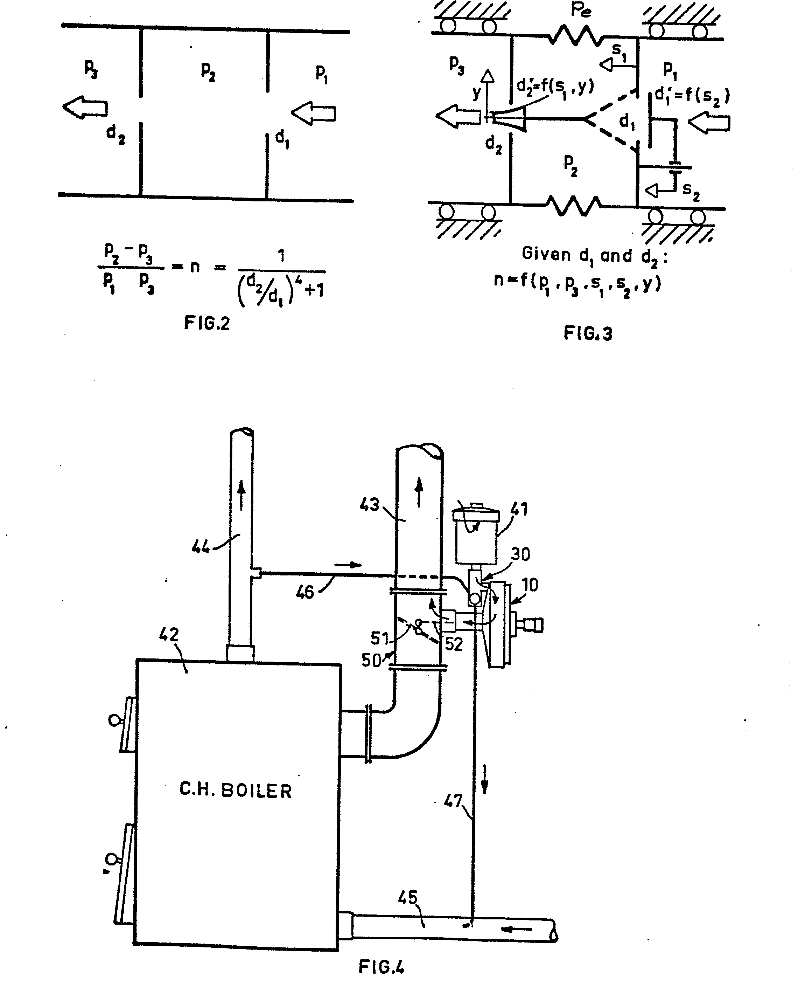

The function of the draught control device is based on the
pressure ratio formula of cascade flow shown in Fig. 2 ( see
e.g. Kurt W. Geisler: "Regelung von Heiz- und Klima-Anlagen"
2. ed., Marhold-Verlag, Berlin 1969, s. 65) which is
self-explanatory.

At reasonable difference of pressures and, if n refers to
the ratio of pressure differences in spaces so that

$$n= (p_2 - p_3)/(p_1 - p_3), \text{ is} \qquad (1)$$

$$n= \frac{1}{(d_2/d_1)^4 + 1} \qquad (2)$$

where $p_1$, $p_2$ and $p_3$ are pressures,                 and $d_1$ and
$d_2$ are diameters of the openings of spaces. Due to flexible
assembly of the cylinder, when underpressure is used for

controlling, i.e. $p_2$ is smaller than outside or environment pressure $p_e$, an inverse ratio $d_2/d_1$ should be used in equation (2) instead of $d_1/d_2$.

Figure 3 illustrates how pressure difference equation of cascade flow is applied in the control system of the invention. The enclosure between the end walls is made flexible. The wall against the inlet pressure $p_1$, or the wall against the outlet pressure $p_3$, or both of them are capable of moving axially so that the distance between the walls can be changed by distance $s_1$. The opening $d_2$ is replaced by means of a control cone, with a ring-formed equivalent opening $d'_2$ so that $d'_2 = f(s_1, y)$, where y is a radius of the cone. The control cone is fixably connected to the wall against the inlet pressure $p_1$. The opening $d_1$, in turn, is also fitted with means of adjustment so that it can be replaced with an equivalent ring-formed opening $d'_1 = f(s_2)$, where $s_2$ is the absolute distance moved by the disk upstream of the opening. If required, the disk can be replaced by another control cone to form another equivalent opening $d''_1 = f(s_2, z)$, where z is a radius of this cone.

The opening $d_1$ or its equivalent may be located, by means of a conduit, outside the control device 10 itself; however, the diameter of said conduit is to be a multiple of the diameter $d_1$ or its equivalents in order to retain the validity of the equation (2) and avoid a system of 2-stage cascade. As pressure $p_2 < p_e$, an inverse ratio $d_1/d_2$ should be used in equation (2).

In Fig. 1, the actuator 10, comprises a cylinder bottom 11, fixably engaged with control valve housing 12 by means of nut 13 and a piston 14, hermetically sealed with said cylinder bottom 11 by means of an elastic roller membrane 15, which, in turn, is secured with a manle ring 16 against the cylinder bottom 11.

The piston 14 is fixably engaged, by means of a flange 17 and a stuffing box 18, with a hollow shaft 19, extending axially in a linear roller bearing 20. The said bearing 20 is of the type with endless roller tracks and is located in housing, which is a part of the said control valve housing 12.

The action force of the piston 14 of the actuator 10 is transmitted by means of a spindle 21, engaged in alignment with said stuffing box 18 and sealed with packing 22. The spindle 21, which is capable of axial movement, is a part of control and adjusting means, designated generally as 23.

Inside the actuator 10, the control valve housing 12 is fitted with radial openings 24, the total area of which is to be a multiple of the area of opening $d'_1$, thus allowing free entry from the cylinder space to the control valve space. The control valve housing 12 forms, inside the housing, a seat, which together with the end 19' of the hollow shaft 19, forms the control valve opening $d'_2$. The end 19' of the shaft 19 has been formed to a control member changing appropriately on its cross-section in the longitudinal direction of the axis or shaft 19, preferably a cone.

The control valve housing 12 is fitted with a spider 25 to bear the force, produced by a spring 26. The spring force is transmitted by a spring guide 27, locked on the spindle 21, to the system of said control and adjusting means 23. A control knob 28, fitted with threads for axial displacement is provided for axial displacement of the spindle 21 by means of a roller bearing 29.

A thermostat valve, designated generally as 30, is provided to response to the temperature signal of the heating water.

The area of the cross section of the joining conduit 30a is to be a multiple of the area $d'_1$.

A nozzle 39, fitted with threads for the filter 41, is disposed within the valve housing 31 and sealed with an O-ring 38. The lower end of the valve housing 31 forms a thermostat housing, fitted with a thermostat 40, a seal 32, and a connection plug 33 with inlet and outlet openings for the supply and exhaust pipes 46 and 47 respectively.

A thermostat spindle 34, capable of displacement in alignment with the thermostat 40, bears the force of the return spring 36. An axially adjustable control plug 37, together with said nozzle 39, forms a control valve opening $d'_1$.

The axial displacement of the spindle 21 of the control and adjusting means 23 is transmitted, by means of a connecting rod 52 and two pinpoint bearings to the butterfly valve 51, which also is mounted on two pinpoint bearings for minimum friction.

The operation of the draught control system according to the invention is based on the control of the pressure between different spaces, especially according to the principle of cascade flow.

The control air, cleaned by filter 41, enters, through opening $d'_1$ to the thermostat valve 30 and flows, via conduit 30a and the actuator 10, to the control valve housing 12 through the openings 24. From here, passing the opening $d'_2$, the air enters the flue 43 and mixes with flue gases. With the equivalent diameters of $d'_1$ and $d'_2$ set at a few millimeters only, the rate of volume flow is small but capable of keeping the system cool enough. On the other

_hand, it is sufficient for rapid response of the system to the variations of the flue pressure and allows an open connection to the flue and use of direct control of the butterfly valve without friction of stuffing boxes and bearings.

Given the position of the spindle 21 to provide a certain angle of opening of the butterfly valve 51, the sum force, produced by the spring 26 and the system of said butterfly valve 51 is in balance with the action force of the actuator 10 and the equality of the equation (2) is valid.

Drop of the flue gas pressure results in displacement of the piston 14 to the left (fig.1), together with means of control and adjustment 23 until the area of the opening $d'_2$ has decreased enough to return the equality in said equation (2) and the balance of the entire system respectively. Having the cone of the hollow shaft 19 properly dimensioned, the said butterfly valve 51 reaches always a position, where the rate of the flue gas flow or the draught remains unchanged.

Rise in the flue gas pressure results in drop of the action force of the actuator 10 and the force, produced by the said spring 26, returns the cone 19' to a new position, where the area of the opening $d'_2$ is large enough to return the equality of the equation (2) and the system is in balance.

At predetermined maximum temperature of the central heating water, the thermostat 40 responds to it and lifts the thermostat spindle 34 upwards until the control plug 37 has fully closed the opening $d'_1$. Thus, $d_1 = 0$ and $n = 1$ and pressure difference $p_1 - p_2$ i.e. the pressure of flue affects the piston 14 in full, causing displacement of the piston to the leftmost position (fig.1) and reduction of the flue gas flow respectively. Decreased draught, in turn, results in drop of the heating temperature and the return spring 36 returns the thermostat to its initial position.

Fig. 5 to 11 illustrate among other things how the desired shape of the control cone can be defined.

Fig. 5 illustrates the butterfly valve 51 in closed position. The direction of flow of the flue gases in the valve housing 50 is upwards. Opening the valve 51 to an angle  results in a counterwise torque, caused by aerodynamic forces. The torque is balanced, to a certain extend, by means of a counterweight 53. The resultant force, produced by these torques and transmitted to the spindle 21 by the connecting rod 52, is designated as $P_{53}$ and plotted in Fig. 6 against the angle of opening.

In Fig. 7 the force $P_{53}$, together with the force F produced by the spring 26, is plotted against the percentage of opening of the valve, measured in axial displacement of the spindle 21. The sum force of said forces $P_{53}$ and F is designated as $FP_{53}$. In the same system of axis there are plotted the forces M of the piston 14 at zero $d'_1$, designed as $M_1 - M_9$, and corresponding the constant pressures of 1 to 9 units per unit of area.

In Fig. 8 the rates of the volume flows $V_1 - V_9$, in per cent, are plotted against the percentage of opening, corresponding to the constant pressures of 1 to 9 units per unit of area respectively.

When considering figures 7-8 at the given rate of volume flow, e.g. 50 % of maximum, a vertical line AC can be plotted to pass the point of intersection of the curve $V_1$ and the horizontal line of V = 50 %. Respective verticals can be drafted to pass other points of intersection.

Therefore, in above mentioned figures the distance AB represents the piston force, required for maintaining the balance of the control system, in comparison with the maximum piston force available at this pressure of 1 units per unit of area. The ratio AB : AC = n, i.e. the ratio of pressure differences.

In Fig. 9 values of n for values of 25 % - 100 % of V are plotted against the percentage of opening. Each curve of n has its respective position of the adjustment knob 28.

It can be seen in figure 9, for a given position e of the butterfly valve 51, various rates of the flue gas flow can be obtained with different values f, g, h, of n. Thus, it is possible to change the rate of flow just by changing the value of opening $d'_1$, however, with certain limitations in regard to the range of pressures. This is employed in the system of the thermostat valve 30. It is more advantageous in figure 9, therefore, to move horizontally along the line a-b-c-d of constant n by means of the means of control and adjustment 23.

Having the spring constant of the spring 26 and the torque of the butterfly valve 51 properly dimensioned, the n-curves may be shifted together to form, accurately enough, a common curve of n, illustrated in figure 10. Given the values of $d'_1$ and the seat diameter of the control valve opening $d'_2$, the form of the control cone of the hollow shaft 19' in figure 11 can be easily calculated by means of the equation (2). However, certain experimental corrections are necessary due to the different coefficients of resistance of round and ring-formed openings.

The controlling method of the invention has above been explained referring only to one preferred embodiment. So the method can be used for controlling the fluid flow in
general, even when pressure differences are very low and by
cooling the driving fluid also when temperatures are high.
The method is, of course applicable also for ventilation
systems of buildings.

In the above mentioned embodiment of the invention the
device  applying the method can be constructed in the way
that it operates e.g. as a shunt valve of boiler's flue
cleaner. The device opens totally from the closed position
when pressure difference between space of flue filter and
flue ventilator and open air has reached the point where the
mentioned filter already needs to be cleaned and blinding
causes energy losses. This is based on the fact that control
function of the method, in this case pushing force of
spindle 21 as a function of its displacement can be chosen
free with shape of cone shaped end 19' of axis 19. As,
according to the figure 9, there are several operating
ranges, it is therefore possible with the same valve to open
the way to natural flow e.g. in the case the flue ventilator
stops because of electric disturbance and causes a danger
of explosion in addition to burning disturbance. In that
case the control opening $d_1$ is made smaller with an spring
backforced magnetic valve so that flap valve 51 opens when
pressure difference is not more than equivalent to fire
bottom resistance.

It must also be noticed that the actuator 10 represents a
solution, where operating range can be chosen with adjusting
means 23. For the shunt valve mentioned above this is not
necessary, because spindle 21 and hollow shaft or axis 19
can be of same material.

The above described regulation makes it also easier to use
long distance control making use of in itself well known magnetic, hydraulic and pneumatic component with or without timer and driven, when needed, by radio waves.

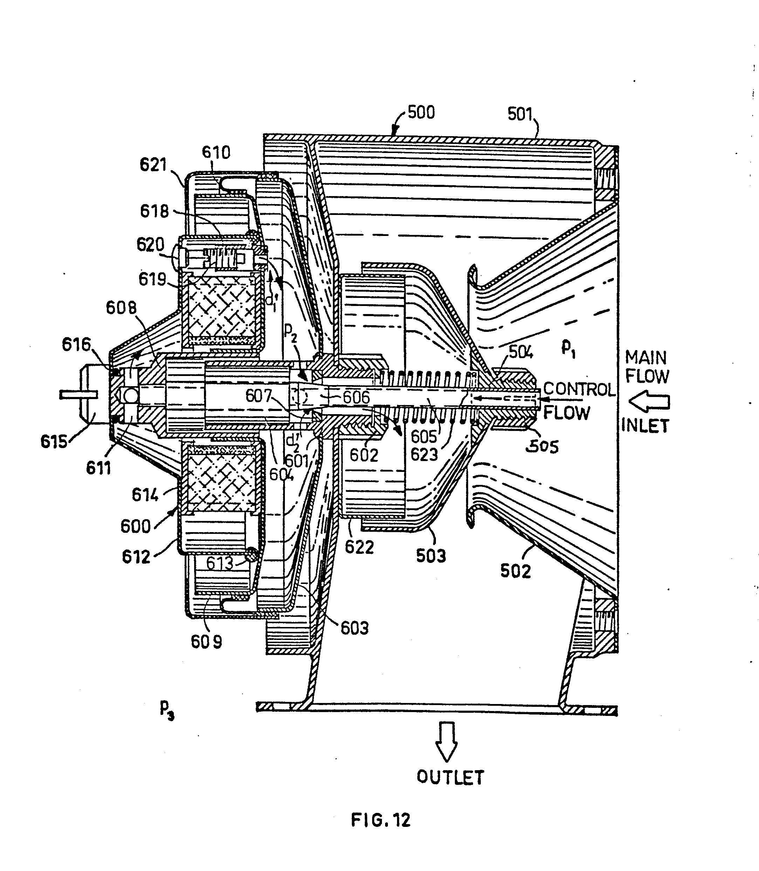

Finally, figure 12 is a cross-sectional view of one embodiment of the constant pressure valve, discussed above and designated generally as 500. This embodiment of the method according to the invention comprises a device marked with number 10 in figure 1 and with number 600 in figure 12. This is provided with a control air filter 614, but the control air is supplied to the device through a hollow shaft 605 from a space pressure of which is controlled. The hollow shaft, in this case, functions as a conduit. The mentioned control air can be supplied to the conduit also from outside with a flexible tube connection. The device is fixably mounted in the valve housing 501.

A main valve seat 502 is provided to supply the fluid to the valve housing 501 being sealably mounted together with the housing itself. A control valve housing 601 is fixably engaged with a spring guide 602 to the aft end of the valve housing 501.

A cylinder bottom 603 is fixably engaged with said control valve housing 601, the aft end of which forms a housing for a linear bearing 604 of the type having endless roller tracks. A hollow shaft 605, partly extending to the valve housing 501, is capable of axial displacement inside in alignment with the linear bearing 604 and the main valve seat 502, having a control cone fixably mounted on it. The control cone and a control valve seat 607, fixably disposed in the control valve housing 601, form the opening $d'_2$ in figure 3.

A means, comprising a boss 608 and a piston 609, are fixably mounted on the hollow shaft 605 to form, together with an elastic roller diaphragm 610 a hermetically closed actuator cylinder. The boss 608 has one or more borings 611 to form a conduit from the boring of the hollow shaft 605 to a means of filtration, comprising a filter housing 612, a housing seal 613, a filter 614 and a closed nut 615 for mounting of the means of filtration sealably, by means of an O-ring 616, to the aft end of the boss 608. A mante 621 is provided for securing and protecting the roller diaphragm 610.

A nozzle 618 is fixably mounted to the cylinder bottom 603 providing an opening $d'_1$ (fig. 3) fitted with an adjustment means 619, displaceably disposed in the housing of the nozzle. A plug 620 is provided for closing the opening in the filter housing 612, which opening is necessary for adjustment of the opening $d'_1$. A ring 622 is fixably mounted to the aft end of the main valve housing to protect a return spring 623, mounted on the hollow shaft 605.

Finally, a main valve disk 503 is adjustably mounted on the fore end of the hollow shaft 605 by means of a disk boss 504. The disk boss is fitted with two or more clefts and conical threads for purposes of tightening the joint by means of nut 505.

The method according to the invention for pressure control of a space is illustrated in figure 8. The draught control device according to figures 1 and 4, which is a constantflow valve of its type, responded to the rise of the pressure difference $p_1 - p_3$, corresponding a shift from point a on the curve $V_1$ to point c on the curve $V_3$ through shift from said point c to point b along the curve $V_3$. This shift means a displacement of the valve disk in the direction of closing the valve until the volume flow with a new higher pressure is the same as before.

.Contrary to this, the constant pressure valve applying to the method of the invention responds to the rise of the pressure difference $p_1 - p_3$ through opening the valve along, the same curve of volume flow rate at constant pressure until the increase in the opening is capable of eliminating the disturbance and return from point c back to the original curve $V_1$ to the point d.

Function of the valve is as follows: A small part, about 1 % of the main flow is used for purposes of control and led, through the control conduit, i.e. through the boring of the hollow shaft 605, to the filter space 614 and passing the opening $d'_1$, further to the cylinder space of the actuator 600. From there, passing the opening $d'_2$, the control flow enters to the outlet side of the main valve 500. The internal pressure of the actuator 600 is controlled by the openings $d'_1$ and $d'_2$.

Therefore, given a rise in pressure $p_1$, the increase in pressure $p_2$ shifts the piston 609 left, increasing the opening $d'_2$ and opening the main valve respectively, until the control pressure $p_2$ has proper value for returning the balance between the increased spring force and the sum force of the piston 609 and the main valve disk 503. If disturbance in the pressure $p_1$ exceeds the capacity of the valve, it opens totally, until the pressure has fallen back to its operating range. As the pressure $p_1$ falls the functioning is inverse but in principle the same.

CLAIMS

1. A method for regulating a fluid flow in a conduit, in which method a valve placed in the conduit is controlled by means of appropriate physical characteristics such as pressure and/or temperature of fluid and by employing a method based on the principle of cascade flow, in which method there is arranged in connection with the conduit an enclosure, preferably a cylinder space, having the end walls, at least one of which being movable and which enclosure is connected with the first opening ($d_1$) against the inlet pressure ($p_1$) and the second opening ($d_2$) against the outlet pressure ($p_3$) and in which method the regulation of the internal pressure ($p_2$) of the enclosure is effected through changing the mutual ratio of the areas of the openings ($d_1$, $d_2$) by a piston (14, 19) or equivalent joined to the movable wall and/or through controlling the mutual ratio of the areas of the openings from outside of the enclosure so that the piston force needed for changing the cross-sectional flow area of the opening and needed for the regulation of flow at each moment and each pressure difference is equal to the sum of forces opposing the said movement  c h a r a c t e r i z e d  in that there is arranged a control flow conduit between the main flow conduit and suitable comparison space in which control conduit fluid flow is regulated by the said method based on the principle of cascade flow and in connection with the control flow conduit there is arranged the said cylinder space connected with the first opening ($d_1$) to the comparison space ($p_2$) and with the second opening ($d_2$) to the main flow conduit and the  displacement of the movable wall and the piston at the same time is transmitted further to the control movement of the postion of the valve placed in the main conduit.

2.  The method of claim 1 for regulating a combustion air or draught in central heating boilers in which method a valve placed in the flue is controlled by means of appropriate physical characteristics such as the pressure of the flue gases and/or the temperature of heating water  c h a r a c- t e r i z e d  in that an air flow conduit is arranged between the environment of the central heating boiler and the flue and the air flow i.e. the control air flow in the said air flow conduit is regulated by means of the said method based on the principle of cascade flow in which method there is arranged in connection with the air flow conduit the cylinder space having the end walls with the openings $(d_1, d_2)$, one of the walls at least being movable and the regulation of the control air flow is effected through changing the mutual ratio of the areas of the openings by a piston (14, 19) joined to one of the movable walls and the displacement of the movable wall and the piston at the same time is transmitted further to the control movement of the position of the flap (51) of the valve placed in the flue.

3.  The method of claim 2, c h a r a c t e r i z e d  in that the area of the first opening $(d_1)$ of the cylinder space is controlled by means of a spindle or equivalent member which is displaced by a thermostat (40) which, in turn, is arranged to respond to the temperature of heating water.

4.  The method of claim 1 for maintaining constant pressure in a space in which method there is arranged a valve in a main flow conduit connected to the space which valve is regulated by means of appropriate physical characteristics such as the pressure of the space and/or the temperature of fluid  c h a r a c t e r i z e d  in that a control conduit is arranged between the said space and the main flow conduit or equivalent comparison space and the control fluid flow flowing through the said control conduit is regulated by means of the said method

0134833

based on the principle of cascade flow in which method there is arranged in connection with the said control conduit the cylinder space having the end walls with the openings ($d'_1$, $d'_2$) one of the walls at least being movable and the regulation of the control fluid flow is effected through changing the mutual ratio of the areas of the opening by a piston (609) joined to one of the movable walls and the displacement of the movable wall and the piston (609) at the same time is transmitted further to the control movement of the member, preferably the valve disk (503), by which the main flow is regulated.

5. The method of claim 2, 3 or 4 c h a r a c t e r i z e d in that the piston (14, 19; 609) joined to the movable wall is connected to a control member, the cross-section of which is changed appropriately in the longitudinal direction of the shaft (605), preferably a cone (19', 606), by which the equivalent opening of the second opening ($d'_2$) is defined and further in connection with the forces opposing the displacement of the piston the balance of the control system.

CONTROL
AIR

FIG.1

$$\frac{p_2 - p_3}{p_1 \quad p_3} = n = \frac{1}{\left(d_2/d_1\right)^4 + 1}$$

FIG.2

Given $d_1$ and $d_2$:
$$n = f(p_1, p_3, s_1, s_2, y)$$

FIG.3

C.H. BOILER

FIG.4

FIG.5

FIG.6

FIG.7

FIG.8

FIG.9

FIG.10

CONTROL CONE
FIG.11

FIG. 12

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| D,A | FI-A- 60 069 (E.J. NISKANEN)<br>* Whole document * | 1-5 | F 23 N 3/02<br>G 05 D 7/01 |
| A | NL-C- 96 304 (N. CARDER)<br>* Figures 1,2 * | 1,2 | |
| A | US-A-2 113 440 (A.D. COLE)<br>* Figures 1,3-5; page 2, lines 48-51 * | 1-3 | |
| A | US-A-4 276 871 (H. LINDTVEIT)<br>* Figures 1,3 * | 1 | |
| A | BE-A- 855 565 (INDUSTRIEELE MAATSCHAPPIJ ZUTPHEN B.V.) | | |

**TECHNICAL FIELDS SEARCHED (Int. Cl. ³)**

F 23 N
G 05 D

The present search report has been drawn up for all claims

| Place of search<br>THE HAGUE | Date of completion of the search<br>11-05-1984 | Examiner<br>THIBO F. |
|---|---|---|